# NEUE EUROPÄISCHE PATENTSCHRIFT

(11) **EP 0 973 635 B2**
(45) Veröffentlichungstag und Bekanntmachung des Hinweises auf die Entscheidung über den Einspruch: **06.09.2006**
(45) Hinweis auf die Patenterteilung: 02.05.2002
(21) Anmeldenummer: 99900197.7
(22) Anmeldetag: 19.01.1999
(51) Int. Cl.: B29C 45/27

(54) **SCHMELZELEITHÜLSE**
MELT GUIDE SLEEVE
MANCHON DISTRIBUTEUR DE LA MATIERE PLASTIQUE FONDUE

(30) Priorität: 21.01.1998 CH 13498
(43) Veröffentlichungstag der Anmeldung: 26.01.2000
(73) Patentinhaber: Protool AG, 4923 Wynau (CH)
(72) Erfinder: CHRISTEN, Andreas, CH-4856 Glashütten (CH)
(74) Vertreter: AMMANN PATENTANWÄLTE AG BERN
(86) Internationale Anmeldenummer: PCT/CH1999/000023
(87) Internationale Veröffentlichungsnummer: WO 1999/037461

(56) Entgegenhaltungen:
- EP-A- 0 021 273
- WO-A-90/03876
- DE-A- 2 831 877
- DE-A- 402 866 002
- FR-A- 2 399 314
- FR-A- 2 691 665
- JP-A- 61 188 118
- US-A- 3 024 498
- US-A- 4 238 182
- US-A- 5 217 730
- PATENT ABSTRACTS OF JAPAN vol. 96, no. 6, 28. Juni 1996 & JP 08 052767 A (MITSUBISHI MATERIALS CORP), 27. Februar 1996

## Beschreibung

Die vorliegende Erfindung bezieht sich auf Schmelzeleithülsen gemäss Oberbegriff des Anspruchs 1.

Bekannte Heisskanalsysteme, welche zum Beispiel beim Spritzgiessformen zur Verarbeitung von Thermoplasten verwendet werden, haben fest verankerte Schmelzeleithülsen.

Eine Schmelzeleithülse gemäss dem Oberbegriff des unabhängigen Anspruchs 1 ist in EP-A-0 021 273 beschrieben. Die Schmelzeleithülse wird zusammen mit dem Düsenkörper, aus welchem der geschmolzene Kunststoff tritt, fest auf dem Formnest montiert, um eine Dichtung gegenüber einer Leckage von geschmolzenem Kunststoff nach aussen zu bewirken.

Eine weitere Schmelzeleithülse, die fest mit dem Düsenkörper verbunden ist, wird in WO 90 03876 A beschrieben.

Eine ähnliche Schmelzeleithülse ist aus JP 08 052767 A bekannt.

Durch die Temperaturunterschiede können Ausdehnungsdifferenzen zwischen dem Heisskanalsystem und dem Formnestauftreten, so dass z.B. der Austritt des Düsenkörpers nicht mehr ganz genau zum Eintritt des Formnestes fluchtet. Die Ausdehnung muss bei bekannten Systemen sehr genau berechnet werden. Die Anwendungen verlangen daher extrem enge Einbautoleranzen und führen oft zu Formnestbruch oder Undichtheit bei Temperaturabweichungen. Eine höhere Temperatur kann zu Bruch führen, weil nicht genug Platz vorhanden ist für die Ausdehnung. Eine tiefere Temperatur kann zu Undichtheit führen, weil zuviel Spielraum zwischen Dichtlippe und Formnest-Anschnitt entsteht.

Eine Aufgabe der vorliegenden Erfindung besteht darin, eine Schmelzeleithülse anzugeben, mitwelcher thermisch verursachte Ausdehnungsdifferenzen zwischen einem Innenfluss-Heisskanalsystem und einem Formnest, die durch einen Luftspalt voneinander isoliert sind, ausgleichbar sind.

Diese Aufgabe wird mit der Schmelzeleithülse gemäss dem unabhängigen Anspruch 1 gelöst.

Zweckmäßige Weiterbildungen der Erfindung sind Gegenstand der abhängigen Ansprüche.

Die Erfindung wird an hand des folgenden Ausführungsbeispiels unter Bezugnahme auf die beigefügten Figuren erläutert.
- Bild 1: zeigt die Anordnung einer Schmelzeleithülse bei schräger Anwendung in einem Heisskanalsystem,
- Bild 2: zeigt die Anordnung einer Schmelzeleithülse bei radialer Anwendung,

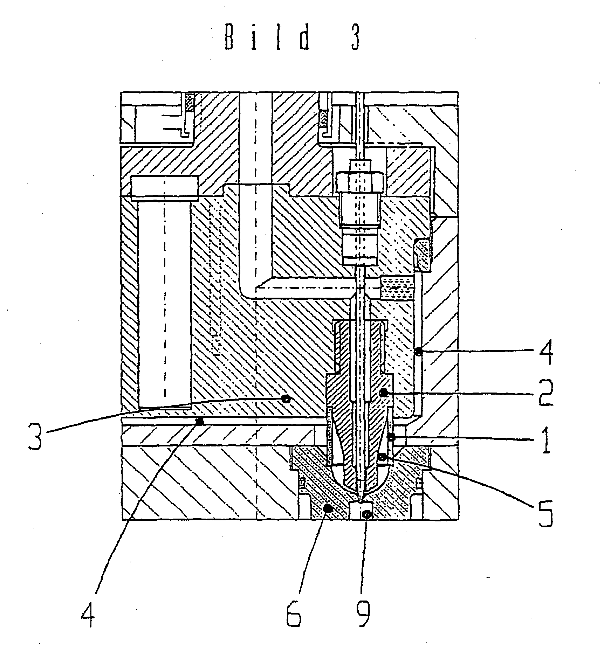

- Bild 3: zeigt die Anordnung einer Schmelzeleithülse bei axialer Anwendung,
- Bild 4: zeigt die erfindungsgemässe Schmelzeleithülse im Detail.

Ein Heisskanalsystem 3 ist eingebaut in einem Spritzgiesswerkzeug, welches Teil von einer Spritzgiessmachine ist. Die Spritzgiessmaschine führt aufgeschmolzene Thermoplaste unter hohem Druck (bis 2500 Bar) und hoher Temperatur (bis 400° Celsius) in das Spritzgiesswerkzeug ein. Die heisse Schmelze durchläuft das beheizte Heisskanalsystem 3 bis zum gekühlten bzw. temperierten Formnest 6. Im gekühlten Werkzeug befindet sich das beheizte Heisskanalsystem 3.

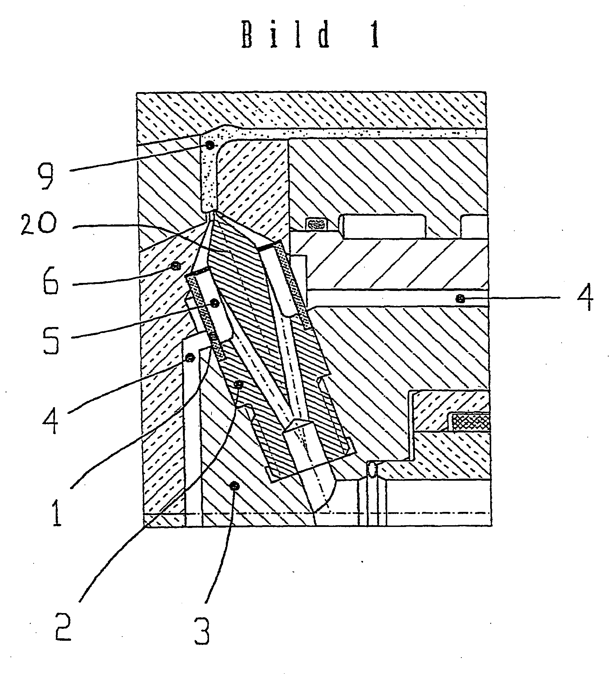

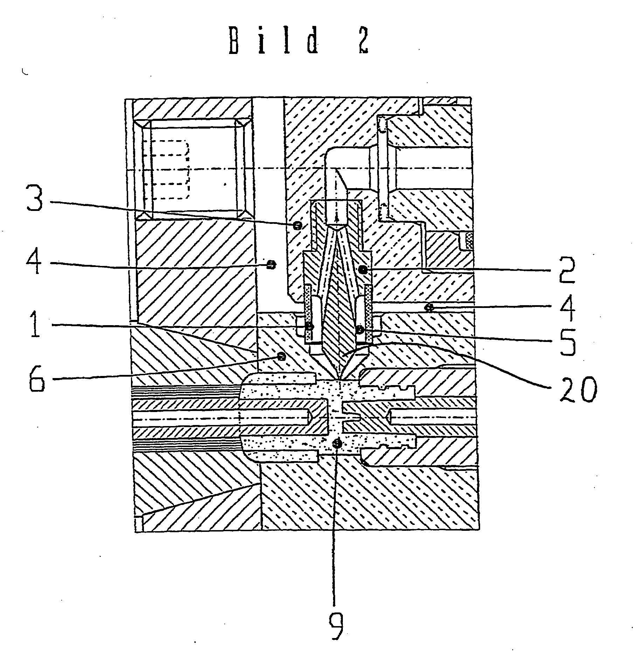

Die beiden Teile - Heisskanalsystem 3 und Formnest 6 - müssen thermisch getrennt werden, ohne die Dichtheit zu verlieren. Es gilt, dass je besser die Isolation dazwischen ist, desto besser funktioniert das Heisskanalsystem. Die beste thermische Trennung wird durch einen Luftspalt 4 erreicht.
Die Schmelzeleithülse 1 ist das Verbindungsteil zwischen dem beheizten Heisskanalsystem 3 und dem kälteren Formnest 6. Die Schmelzeleithülse 1 umgibt die Nadel 20 des beheizten Düsenkörpers 2, welche die Schmelze vom Heisskanalsystem 3 zum Anschnitt im Formnest 6 führt (Bild 1 und 2).

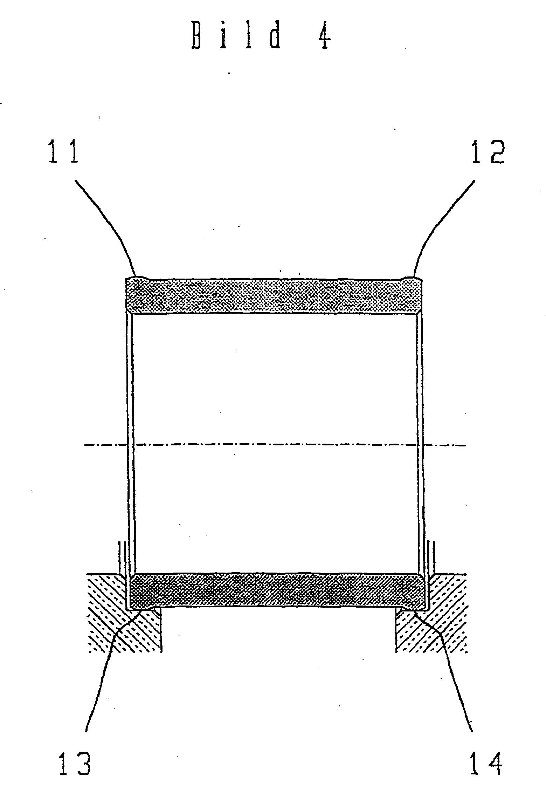

Die Schmelzeleithülse 1 weist bombierte Dichtlippen 11,12 an beiden Enden am Aussendurchmesser auf (Bild 4). Der zylindrische Austritt 13 am beheizten Düsenkörper 2 in Form einer Ausnehmung und der zylindrische Eintritt 14 am kälteren Formnest 6 in Form einer Ausnehmung bilden die beiden Dichtelemente zur Schmelzeleithülse. Thermoplastischer Kunststoff wird so ohne Leckage vom beheizten Düsenkörper 2 zum Formnest 6 geleitet. Die Schmelzeleithülse 1 ist in den beiden Ausnehmungen lose eingebaut, damit sie sich bewegen kann wie ein Gelenk.

Dadurch wird erreicht, dass eine beim Aufheizen entstehende Relativbewegung zwischen dem Heisskanalsystem 3 und dem Formnest 6 von der erfindungsgemässen Schmelzeleithülse 1 aufgenommen wird, ohne die Dichtheit selbst bei hohem Innendruck und hohem Temperaturgefälle zu verlieren.

Bei Mehrfachdüsen oder seitlichen Anschnittmethoden ergeben sich zwangsläufig kleinere, geometrische Fehler beim Ausdehnen des beheizten Heisskanalsystemes 3, d.h. der Austritt des heissen Düsenkörpers 2 fluchtet nicht ganz genau zum Eintritt des Formnestes 6.

Auch dieser Fehler wird von der erfindungsgemässen Schmelzeleithülse 1 aufgefangen, ohne die Dichtheit zu verlieren. Imweiteren bläht der hohe Innendruck die Schmelzeleithülse 1 zusätzlich etwas auf und drückt die Dichtlippen 11,12 fest an Austritt- und Eintrittdurchmesser. Dadurch wird eine absolute Dichtheit erreicht. Somit sind grössere Entfernungen vom Ausdehnungsnullpunkt des Düsenkörpers zum Formnest-Anschnitt möglich als bei bekannten Systemen.

## Patentansprüche

1. Schmelzeleithülse (1), welche als Verbindungsteil zwischen einem Innenfluss-Heisskanalsystem (3) und einem Formnest (6) dient, welche durch einen Luftspalt (4) voneinander isoliert sind, **dadurch gekennzeichnet, dass** die Schmelzeleithülse (1) gelenkig angebracht ist, so dass eine unterschiedliche thermische Ausdehnung zwischen dem Innenfluss-Heisskanalsystem (3) und dem Formnest (6) und/oder geometrische Unregelmässigkeiten zwischen dem Innenfluss-Heisskanalsystem (3) und dem Formnest (6), verursacht durch eine thermische Ausdehnung, ausgleichbar sind;
dass sie mit einem der beiden Enden in einem zylindrischen Austritt (13) am Innenfluss-Heisskanalsystem (3) und mit dem anderen Ende in einem zylindrischen Eintritt (14) am Formnest (6) angebracht ist;
und dass sie lose eingebaut ist, damit sie sich wie ein Gelenk bewegen kann.

2. Schmelzeleithülse (1) gemäss Anspruch 1, **dadurch gekennzeichnet, dass** sie Innendrücken bis 2500 Bar und einem Temperaturgefälle bis 400° Celsius standzuhalten vermag.

3. Schmelzeleithülse (1) gemäss Anspruch 1, **dadurch gekennzeichnet, dass** an beiden Enden am Aussendurchmesser eine Dichtvorkehrung vorhanden ist.

4. Schmelzeleithülse (1) gemäss Anspruch 3, **dadurch gekennzeichnet, dass** die Dichtvorkehrung eine bombierte Dichtlippe (11,12) enthält.

5. Schmelzeleithülse (1) gemäss Anspruch 3 oder 4, **dadurch gekennzeichnet, dass** sie durch einen hohen Innendruck aufweitbar ist, um eine Dichtung der beiden Enden der Schmelzeleithülse (1), Insbesondere wenn diese bombiert sind, nach aussen zu bewirken.

6. Schmelzeleithülse (1) gemäss einem der Ansprüche 1 bis 5, **dadurch gekennzeichnet, dass** sie eine Nadel (20) umgibt, welche eine Schmelze von einem beheizten Düsenkörper (3) zum Anschnitt des Formnests (6) führt.

## Claims

1. Molten mass guide sleeve (1) serving as a connecting piece between an internal flow hot runner system (3) and a mold cavity (6) insulated from each other by an air gap (4), **characterized in that** the molten mass guide sleeve (1) is mounted in an articulated manner, thereby allowing to compensate for differences in the thermal expansion of the internal flow hot runner system (3) and of the mold cavity (6) and/or geometrical irregularities between the internal flow hot runner system (3) and the mold cavity (6) caused by thermal expansion;
**in that** it is mounted by one of its ends in a cylindrical outlet (13) of the internal flow hot runner system (3) and by its other end in a cylindrical inlet (14) of the mold cavity (6);
and **in that** it is loosely mounted in order to be able to move like an articulation.

2. Molten mass guide sleeve (1) according to claim 1, **characterized in that** it is capable of withstanding internal pressures up to 2,500 bar and temperature differences up to 400° Celsius.

3. Molten mass guide sleeve (1) according to claim 1, **characterized in that** a sealing means is provided at the external circumference of both its ends.

4. Molten mass guide sleeve (1) according to claim 3, **characterized in that** the sealing means includes a cambered sealing lip (11, 12).

5. Molten mass guide sleeve according to claim 3 or 4, **characterized in that** it is capable of being expanded by a high internal pressure in order to provide an external sealing action of the two ends of the molten mass guide sleeve (1), particularly if they are cambered.

6. Molten mass guide sleeve (1) according to one of claims 1 to 5, **characterized in that** it surrounds a needle (20) guiding a molten mass from a heated nozzle body (3) to the feed orifice of the mold cavity (6).

## Revendications

1. Douille d'amenée de matière fondue (1) servant de pièce de connexion entre un système à canaux chauffants (3) à flux intérieur et la cavité (6) d'un moule isolés l'un de l'autre par une fente à air (4), **caractérisé en ce que** la douille d'amenée de matière fondue (1) est montée de manière articulée, permettant ainsi la compensation d'une différence dans l'expansion thermique du système à canaux chauffants (3) à flux intérieur et de la cavité (6) du moule et/ou d'irrégularités géométriques entre le système à canaux chauffants (3) à flux intérieur et la cavité (6) du moule dues à l'expansion thermique;
**en ce qu'**elle est montée par l'une de ses deux extrémités dans une sortie cylindrique (13) du système à canaux chauffants (3) à flux intérieur et par l'autre extrémité dans une entrée cylindrique (14) de la cavité (6) du moule; et **en ce qu'**elle est montée librement afin d'être mobile comme une articulation.

2. Douille d'amenée de matière fondue (1) selon la revendication 1, **caractérisée en ce qu'**elle est capable de résister à des pressions intérieures jusqu'à 2'500 bar et à des différences de température jusqu'à 400° Celsius.

3. Douille d'amenée de matière fondue (1) selon la revendication 1, **caractérisée en ce qu'**elle présente un dispositif d'étanchéité sur la circonférence extérieure de ses deux extrémités.

4. Douille d'amenée de matière fondue (1) selon la revendication 3, **caractérisée en ce que** ledit dispositif d'étanchéité comprend une lèvre d'étanchéité (11, 12) bombée.

5. Douille d'amenée de matière fondue (1) selon la revendication 3 ou 4, **caractérisée en ce qu'**elle est expansible par une pression intérieure élevée afin d'assurer l'étanchéité des deux extrémités de la douille d'amenée de matière fondue (1) vers l'extérieur, particulièrement lorsque celles-ci sont bombées.

6. Douille d'amenée de matière fondue (1) selon l'une des revendications 1 à 5, **caractérisée en ce qu'**elle entoure une aiguille (20) qui amène la matière fondue d'un corps de buse (3) chauffé à l'entrée de la cavité (6) du moule.
